(19) Europäisches Patentamt / European Patent Office / Office européen des brevets

(11) **EP 3 201 901 B1**

(12) **EUROPÄISCHE PATENTSCHRIFT**

(45) Veröffentlichungstag und Bekanntmachung des Hinweises auf die Patenterteilung:
**12.01.2022 Patentblatt 2022/02**

(21) Anmeldenummer: **15771162.3**

(22) Anmeldetag: **30.09.2015**

(51) Int Cl.:
*G09F 3/00* (2006.01)    *G09F 3/03* (2006.01)
*G06K 19/077* (2006.01)    *G09F 3/20* (2006.01)
*G09F 3/02* (2006.01)

(86) Internationale Anmeldenummer:
**PCT/EP2015/072619**

(87) Internationale Veröffentlichungsnummer:
**WO 2016/050877 (07.04.2016 Gazette 2016/14)**

(54) **ETIKETT**

LABEL

ÉTIQUETTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.10.2014 DE 102014114341**

(43) Veröffentlichungstag der Anmeldung:
**09.08.2017 Patentblatt 2017/32**

(73) Patentinhaber: **Phoenix Contact GmbH & Co. KG 32825 Blomberg (DE)**

(72) Erfinder: **OSTER, Patrick 32657 Lemgo (DE)**

(56) Entgegenhaltungen:
**EP-A1- 2 105 870        EP-A1- 2 581 897
EP-B1- 2 105 870        GB-A- 2 309 955
US-A1- 2007 145 150    US-A1- 2007 279 233**

EP 3 201 901 B1

**Beschreibung**

Die Erfindung betrifft Etikett zum Aufbringen durch Umwicklung auf einen zu kennzeichnenden Gegenstand, bestehend aus einer nicht klebenden Oberseite und einer klebenden Unterseite, mit der das Etikett auf dem Gegenstand befestigt wird, wobei auf der Oberseite ein Druckbereich zur Aufnahme einer Bedruckung vorhanden ist, wobei das Etikett streifenförmig mit einer Länge ausgebildet ist, die größer ist als der Umfang des zu etikettierenden Gegenstandes.

Ein derartiges Klebeetikett ist aus der DE 10 2004 043 301 B4 bekannt. Dieses Etikett wird mit einer Überlappung auf flaschen- oder ampullenartige Behältnisse aufgebracht, wobei im Überlappungsbereich ein Abziehabschnitt vorgesehen ist.

Bei derartigen Etiketten, insbesondere bei Etiketten aus Kunststoff, besteht ein Problem mit dem Verwischen der Bedruckung aufgrund der Glattheit der bedruckten Kunststoffoberfläche. Darüber hinaus besteht, insbesondere dann, wenn die Etiketten in rauhen Umgebungen eingesetzt werden, das Bedürfnis, die Bedruckung vor Verschmutzung zu schützen.

Aus der EP 0 186 112 A2 ist ein Etikett in Form eines Kennzeichnungsschildes für Kabel, Rohre, Behälter u. dgl. bekannt. Dort wird zum Schutz der Bedruckung vor Verwischen und Verschmutzung vorgeschlagen, auf das die Bedruckung aufweisende Kennzeichnungsträgerblatt ein transparentes Deckblatt als Selbstklebefolie aufzubringen. Das so fertig kaschierte Kennzeichnungsschild kann in dieser Form über eine durch eine Lochung greifende Bindung an dem zu kennzeichnenden Gegenstand befestigt werden. Das so kaschierte Kennzeichnungsschild kann auch als planes selbstklebendes Schild mit einer an seiner Unterseite vorgesehenen Klebeschicht auf den zu kennzeichnenden Gegenstand aufgebracht werden. Das Aufbringen eines Deckblatts nach der Bedruckung ist jedoch relativ aufwendig, insbesondere dann, wenn die Bedruckung individuell erfolgen soll.

Aus der DE 11 2004 001 845 T5 ist ein Band mit einer Mehrzahl von abziehbaren Haftetiketten, die beispielsweise auf Ampullen aufgebracht werden, bekannt. Die dort offenbarten Etiketten weisen auf der Oberfläche eine Bedruckung zur Kennzeichnung auf und enthalten innenliegend zur Kennzeichnung zusätzlich einen RFID-Transponder (Radio Frequency Identification). Ein Schutz der Bedruckung vor Verwischen und Verschmutzung wird dort nicht offenbart. Auch ein besonderer Schutz des relativ filigranen RFID-Transponders vor mechanischen Belastungen (z.B. Stoßeinwirkungen), die bspw. bei der Handhabung von etikettierten Kabeln in einem industriellen Produktionsumfeld auftreten können, wird in der DE 11 2004 001 845 T5 nicht beschrieben.

Aus der DE 10 2008 058 765 A1 ist ein in einem speziellen Formkörper eingebetteter RFID-Transponder in Form eines RFID-Tag bekannt, der bspw. in Kleidungsstücke eingenäht wird. Dabei dient der Formkörper dem Schutz des RFID-Transponders vor mechanischen Belastungen. Dieser RFID-Tag ist jedoch nicht als Etikett zum Aufbringen auf Gegenstände durch Umwicklung geeignet. Außerdem weist dieser RFID-Tag keinen Druckbereich für eine Bedruckung auf.

Etiketten der betreffenden Art sind u.a. auch bekannt aus EP 105 870 A1, US 07/145150 A1, GB 2 309 955 A.

Des Weiteren sind Etiketten der betreffenden Art bekannt aus EP 2 581 897 A1, worin ein Etikett zum Aufbringen durch Umwicklung auf einen zu kennzeichnenden Gegenstand, bestehend aus einer nicht klebenden Oberseite und einer klebenden Unterseite, mit der das Etikett auf dem Gegenstand befestigt wird. Dabei weist das Etikett auf der Oberseite ein Druckbereich zur Aufnahme einer Bedruckung vorhanden ist, wobei das Etikett streifenförmig mit einer Länge ausgebildet ist, die größer ist als der Umfang des zu etikettierenden Gegenstandes ist. Dabei ist vorgesehen, dass neben dem Druckbereich in Längsrichtung des Etiketts eine transparente Wickelfahne angeordnet ist, wobei die Länge der Wickelfahne mindestens so groß ist wie der Umfang des zu etikettierenden Gegenstandes. Dabei ist die Wickelfahne bei auf den Gegenstand aufgebrachtem Etikett auf den Druckbereich gewickelt und überdeckt den Druckbereich.

Des Weiteren sind Etiketten der betreffenden Art aus US2007/279233 A1 bekannt, die einen davon abtrennbaren Abschnitt mit einem RFID-Transponder aufweisen.

Der Erfindung liegt die Aufgabe zu Grunde, ein Etikett zur Verfügung zu stellen, dass einen Druckbereich zur Aufnahme einer Bedruckung und einem RFID-Transponder aufweist, wobei in einfacher Weise die Bedruckung vor Verwischen und Verschmutzung und der RFID-Transponder vor mechanischen Belastungen wie Stöße oder Schläge geschützt werden soll. Die Aufgabe wird erfindungsgemäß mit den Merkmalen des Anspruchs 1 gelöst. Zweckmäßige Ausgestaltungen und vorteilhafte Weiterbildungen der Erfindung sind in den Unteransprüchen angegeben. Anspruch 5 bezieht sich auf ein Etikettenband mit einer Vielzahl erfindungsgemäßer Etiketten. Anspruch 8 bezieht sich auf einen Gegenstand, der mit dem erfindungsgemäßen Etikett umwickelt ist.

Das erfindungsgemäße Etikett, welches durch Umwicklung auf einen zu kennzeichnenden Gegenstand aufgebracht wird, besteht aus einer nicht klebenden Oberseite und einer klebenden Unterseite, mit der das Etikett auf dem Gegenstand befestigt wird. Das erfindungsgemäße Etikett kann auch als Wickeletikett bezeichnet werden. Dabei ist auf der Oberseite ein Druckbereich zur Aufnahme einer Bedruckung vorhanden, wobei das Etikett streifenförmig mit einer Länge ausgebildet ist, die größer ist als der Umfang des zu etikettierenden Gegenstandes. Erfindungsgemäß ist neben dem Druckbereich in Längsrichtung des Etiketts eine transparente Wickelfahne angeordnet ist, wobei die Wickelfahne bei auf den Gegenstand aufgebrachtem Etikett auf den Druckbereich gewickelt ist und den Druckbereich überdeckt. Dabei ist im Druckbereich im Inneren des Etiketts, d.h. zwischen der Oberseite und der Unterseite, ein RFID-Transponder angeordnet.

Indem die Wickelfahne aufgrund ihrer Länge bei auf den Gegenstand durch Umwicklung aufgebrachten Etikett auf den Druckbereich gewickelt ist und diesen überdeckt, wird die in diesem Bereich unter der Wickelfahne liegende Bedruckung vor Verwischen und Verschmutzung geschützt. Da die Wickelfahne transparent ausgebildet ist, ist die darunter liegende Bedruckung weiterhin gut lesbar. Da der empfindliche RFID-Transponder zwischen der Ober- und Unterseite des Etiketts und erfindungsgemäß im Druckbereich angeordnet ist, wird der RFID-Transponder durch die Umwicklung und Überdeckung des Druckbereichs durch die Wickelfahne vor Stoßeinwirkungen geschützt, da die Wickelfahne hier eine zusätzliche Schutzschicht bildet. Insbesondere bei der Kennzeichnung von Gegenständen im industriellen Umfeld verbleiben die Etiketten oft sehr lange an den Gegenständen, z. B. einem Kabel. Dabei können nach einiger Zeit Risse in der Oberseite des Etiketts entstehen, durch die Feuchtigkeit eindringen kann. Beim etikettierten Gegenstand schützt die auf den Druckbereich und damit als zusätzliche Schicht auf den RFID-Transponder gewickelte Wickelfahne den RFID-Transponder auch vor dem Eindringen von Feuchtigkeit.

Damit der Druckbereich vollständig von der Wickelfahne umwickelt ist, ist die Länge der Wickelfahne mindestens so groß ist wie der Umfang des zu etikettierenden Gegenstandes.

In einer vorteilhaften Ausführungsform weist das Etikett eine über die gesamte Länge transparente Schicht auf, die rückseitig eine transparente Klebebeschichtung aufweist, welche im Bereich der Wickelfahne die Unterseite des Etiketts bildet, während die transparente Schicht oberseitig über die gesamte Länge des Etiketts die nicht klebende die Oberseite des Etiketts bildet. Dabei ist rückseitig auf der transparenten Schicht im Druckbereich eine farbige (nicht transparente) Hintergrundschicht angeordnet. Diese farbige Hintergrundschicht schafft unabhängig von der Farbe des zu etikettierenden Gegenstandes einen neutralen Farbhintergrund für die Bedruckung und erhöht den Kontrast. Dabei wird vorzugsweise eine Hintergrundschicht in weißer Farbe gewählt. In vorteilhafter Weise ist dabei der RFID-Transponder sandwichartig zwischen der der transparenten Schicht abgewandten Seite der Hintergrundschicht und einer der Hintergrundschicht gegenüberliegenden Klebeschicht angeordnet, wobei diese Klebeschicht im Druckbereich des Etiketts die klebende Unterseite des Etiketts bildet. Durch die sandwichartige Einbettung des RFID-Transponders an dieser Stelle wird dieser durch die farbige Hintergrundschicht, welche der besseren Lesbarkeit der Bedruckung dient, zusätzlich vor Stoßeinwirkungen geschützt.

In einer besonders vorteilhaften Weiterbildung der vorstehend beschriebenen Ausführungsform weist der RFID-Transponder eine Trägerschicht mit der RFID-Antennenstruktur aufweist, wobei der integrierte Schaltkreisbaustein (RFID-IC) des RFID-Transponders erhaben auf der Trägerschicht angeordnet ist. Dabei ist auf der den RFID-IC aufweisenden Seite der Trägerschicht eine Zwischen-Klebeschicht angeordnet ist, welche im Bereich des RFID-IC eine Aussparung aufweist und eine Dicke aufweist, die der Höhe des RFID-IC entspricht. Durch diese so ausgestaltete Zwischen-Klebeschicht wird die Erhabenheit RFID-IC gegenüber der Antennenträgerschicht ausgeglichen, so dass der RFID-Transponder auf der der Hintergrundschicht zugewandten Seite eine plane Fläche aufweist. Damit wird auf der Hintergrundschicht und im Druckbereich des Etiketts eine lokale Erhebung vermieden, die für die Bedruckung, insbesondere für eine Bedruckung mit einem taktilen Druckverfahren (z.B. Thermotransferdruck) sehr störend ist.

Vorzugsweise ist die Länge der Wickelfahne größer als der Umfang des zu etikettierenden Gegenstandes. In dieser Ausführungsform ist die Wickelfahne nicht nur vollständig auf den Druckbereich gewickelt, sondern erstreckt sich in der Umwicklung auch noch über den Druckbereich hinaus, wobei der in der Umwicklung über den Druckbereich hinausgehende Abschnitt der Wickelfahne klebend auf einem zuvor aufgebrachten Abschnitt der Wickelfahne befestigt wird. Die Wickelfahne überragt somit das Ende des Druckbereichs, wobei die Wickelfahne zusätzlich auf sich selbst nochmals befestigt wird und damit den Druckbereich zusätzlich fixiert. Damit wird ein Ablösen des Etiketts vom Gegenstand im Druckbereich zuverlässig vermieden. Da das Etikett im Druckbereich aufgrund des dort angeordneten RFID-Transponders steifer ist als im Bereich der Wickelfahne, neigt das Etikett im Druckbereich, wenn es auf einem Gegenstand mit einer gekrümmten Oberfläche befestigt wird, dazu sich abzulösen. Dabei wird die Steifigkeit des Etiketts in diesem Bereich noch erhöht, wenn im Druckbereich neben dem RFID-Transponder noch eine Hintergrundschicht angeordnet ist. Dies wird durch das zuvor beschriebene "Überkleben" mit der Wickelfahne vermieden.

Zum Schutz der Haftwirkung der klebenden Unterseite des Etiketts und zur bessern Handhabung des Etiketts vor dem Aufbringen auf zu etikettierende Gegenstände, ist das Etikett mit seiner klebenden Unterseite auf einer Schutzschicht angeordnet, die vor dem Applizieren des Etiketts von der klebenden Unterseite abgezogen wird. Dabei ist das Material der Schutzschicht so ausgewählt, dass diese sich ohne Zerstörung der klebenden Unterseite und ohne Mitnahme von Klebebestandteilen abziehen lässt.

Nachfolgend wird die Erfindung unter Bezugnahme auf die anliegenden Zeichnungen anhand bevorzugter Ausführungsformen näher erläutert. Es zeigen

Fig. 1 eine Draufsicht auf zwei noch nicht bedruckte Etiketten, die auf einer durchgehenden Schutzschicht angeordnet sind,

Fig. 2    eine Draufsicht wie in Figur 1, wobei jedoch auf dem ersten Etikett ein Barcode und auf dem zweiten Etikett eine Buchstabenfolge aufgedruckt ist,

Fig. 3    einen Schnitt durch ein Etikett, bei dem der im Inneren des Etiketts im Druckbereich angeordnete RFID-Transponder eingezeichnet ist,

Fig. 4    einen Schnitt durch ein Etikett in einer besonders vorteilhaften Ausführungsform, die im Druckbereich verschiedene Schichten aufweist,

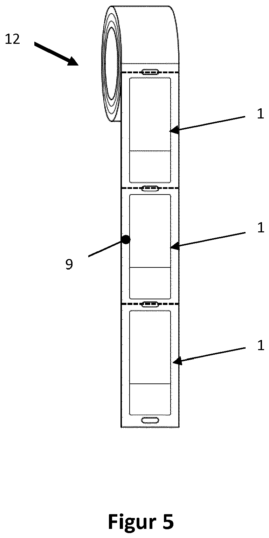

Fig. 5    eine Etikettenbandrolle,

Fig. 6    ein Kabel als zu kennzeichnenden Gegenstand, wobei der Druckbereich des Etiketts bereits um das Kabel gewickelt ist,

Fig. 7    einen Schnitt durch das Kabel (siehe Fig. 6) mit teilweise umwickelten Etikett,

Fig. 8    einen Schnitt durch das Kabel mit vollständig umwickelten Etikett,

Fig. 9    einen Schnitt durch einen zu kennzeichnenden Gegenstand mit einem rechteckigen Querschnitt, wobei das Etikett vollständig umwickelt ist.

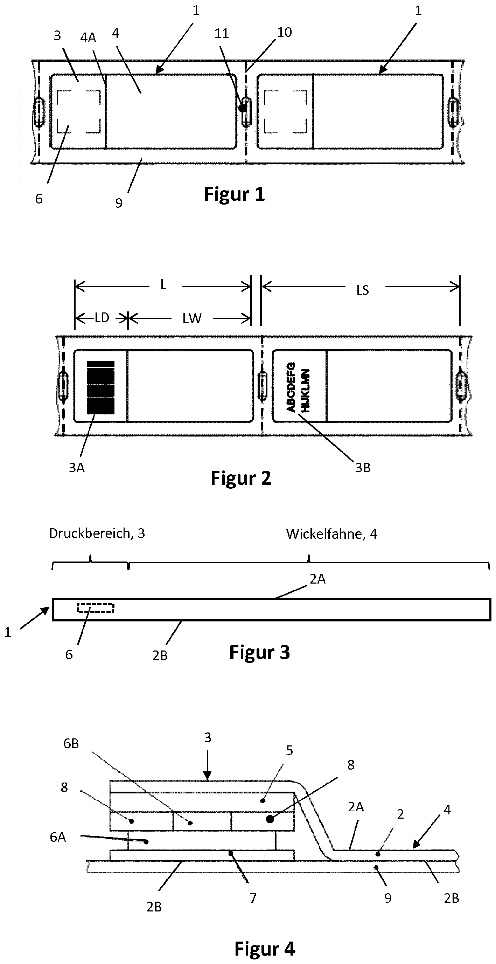

Fig. 1 zeigt eine Draufsicht auf einen Teil eines Etikettenbandes mit zwei noch nicht bedruckten Etiketten (1), die auf einer durchgehenden Schutzschicht (9) angeordnet sind. Die Etiketten (1) werden bevor sie auf die zu etikettierenden Gegenstände (13) aufgebracht werden, einzeln von der Schutzschicht (9) abgezogen. Um die Etiketten mit der jeweiligen Schutzschicht (9) vereinzeln zu können, sind die Schutzschichten (9) benachbarter Etiketten (1) abtrennbar, insbesondere über eine Perforationslinie (10), miteinander verbunden. Dabei sind Schutzschichten vorzugsweise jeweils etwas länger und etwas breiter als die darauf angeordneten Etiketten (1).
Zur Bedruckung werden die auf der Schutzschicht (9) angeordneten Etiketten (1) nacheinander einzeln, aber noch zusammenhängend in Form eines Bandes bestehend aus einer Vielzahl von Etiketten, einem Drucker (bspw. ein Thermotransferdrucker oder Tintenstrahldrucker) zugeführt. An der Trennlinie (10) zwischen benachbarten Schutzschichten (9) ist dabei vorzugsweise eine lichtdurchlässige Öffnung (11) zur Lichtschrankensteuerung des Druckers (nicht dargestellt) vorgesehen.
Es ist jedoch auch möglich, die Etiketten (1) bereits vereinzelt, d.h. nach der Abtrennung vom Band, einem Drucker zuzuführen.
Die streifenförmig ausgebildeten Etiketten (1) weisen einen Druckbereich (3) zur Aufnahme der Bedruckung auf. Neben dem Druckbereich (3) ist in Längsrichtung des Etiketts (1) eine transparente Wickelfahne (4) angeordnet. Die Abgrenzung zwischen Druckbereich (3) und Wickelfahne (4) ist durch eine Trennlinie (4A) gekennzeichnet. Im Inneren des Etiketts (1), d.h. zwischen der nicht klebenden Oberseite (2A) und einer klebenden Unterseite (2B), befindet sich ein RFID-Transponder (6). Dieser ist bezogen auf die Fläche des Etiketts (1) im Druckbereich (3) angeordnet. In der Draufsicht gemäß Figur 1 liegt der RFID-Transponder (6) unterhalb der Oberseite (2A) des Etiketts, auf die der Druck aufgebracht wird. In der Draufsicht gemäß Figur 1 ist der RFID-Transponder (1) daher gestrichelt dargestellt.
In Figur 2 ist eine Draufsicht wie in Figur 1 dargestellt; allerdings nach der Bedruckung und noch vor der Applizierung auf den zu etikettierenden Gegenstand. Dabei ist auf dem ersten Etikett (1) ein Barcode (3A) und auf dem zweiten Etikett (1) eine Buchstabenfolge (3B) aufgedruckt.
Der Druckbereich (3) ist ein definierter, gekennzeichneter Bereich auf der Oberseite (2A) des Etiketts (1), der für die Bedruckung vorgesehen und geeignet ist. Die Bedruckung selbst liegt innerhalb des Druckbereichs, sie muss diesen jedoch nicht vollständig ausfüllen.
Figur 3 zeigt einen Längsschnitt durch ein Etikett, wobei der Maßstab in der Schnittebene senkrecht zur Längserstreckung des Etiketts sehr stark vergrößert dargestellt ist. Das dort dargestellte streifenförmige Etikett (1) besteht aus einer Kunststoffschicht, deren Unterseite (2B) mit einer Klebebeschichtung versehen ist. Die Oberseite (2A) ist nicht klebend ausgebildet. Im Inneren der Kunststoffschicht, d.h. zwischen der Ober- und der Unterseite ist der RFID-Transponder (6) angeordnet. Dabei ist der RFID-Transponder (6) im Druckbereich (3) angeordnet, an den sich die Wickelfahne (4) anschließt.
Bei der in Figur 3 dargestellten Kunststoffschicht kann es sich um eine einzige Kunststoffschicht (Kunststoff-Folie) handeln oder um einen Kunststoffschichtenblock bestehend aus zwei oder mehreren übereinander angeordneten Kunststoffschichten (KS-Folien), die durch Kleben und/oder Lamination miteinander verbunden sind. Im Falle eines Kunststoffschichtenblocks ist die untere Kunststoffschicht eine Klebeschicht oder eine Kunststoffschicht, deren Unterseite (2B) eine Klebebeschichtung aufweist.

Der RFID-Transponder (6) ist vorzugsweise zwischen 2 Kunststoff-Folien eingebettet, die durch Kleben und/oder Lamination miteinander verbunden werden. Als Material für die Kunststoffschicht(en) kann beispielsweise Polyvinylchlorid (PVC) verwendet werden, da PVC für eine Bedruckung, insbesondere im Thermotransferverfahren, sehr gut geeignet ist.

In einer Ausführungsform ist das Etikett (1) vollständig über seine gesamte Länge transparent ausgebildet. In einer vorteilhaften Ausführungsform ist das Etikett (1) nur im Bereich der Wickelfahne (4) transparent ausgebildet, während das Etikett (1) im Bereich des Druckbereiches (3) zur Ausbildung einer neutralen Hintergrundfarbe für die Bedruckung farbig, vorzugsweise weiß, ausgebildet ist. Hierzu kann das Etikettenmaterial, z.B. PVC, lokal im Druckbereich entsprechend eingefärbt sein. Die Hintergrundfarbe kennzeichnet den Druckbereich (3) und grenzt diesen von der transparenten Wickelfahne (4) ab.

Figur 4 zeigt eine Ausführungsform, bei der die Hintergrundfarbe durch eine zusätzliche farbige Hintergrundschicht (5) realisiert wird. Dabei ist der Maßstab senkrecht zur Längserstreckung des Etiketts wie in Figur 3 sehr stark vergrößert.

Dabei weist das Etikett (1) eine über die gesamte Länge (L) transparente Schicht (2), z.B. aus PVC, aufweist, die rückseitig eine transparente Klebebeschichtung, z.B. auf Acrylatbasis, aufweist. Diese rückseitige Klebebeschichtung bildet im Bereich der Wickelfahne (4) die Unterseite (2B) des Etiketts (1) bildet. Die Oberseite der transparenten Schicht (2) bildet über die gesamte Länge (L) des Etiketts (1) die Oberseite (2A) des Etiketts (1). Zur Ausbildung einer neutralen Hintergrundfarbe ist rückseitig auf der transparenten Schicht (2) im Druckbereich (3) eine farbige Hintergrundschicht (5) angeordnet. Diese kann beispielsweise aus eingefärbtem PVC bestehen. Der RFID-Transponder (6, 6A, 6b) ist dabei sandwichartig zwischen der der transparenten Schicht (2) abgewandten Seite der Hintergrundschicht (5) und einer der Hintergrundschicht (5) gegenüberliegenden Klebeschicht (7) angeordnet. Die Klebeschicht (7) kann aus einem Haftkleber auf Acrylatbasis bestehen. Diese Klebeschicht (7) bildet im Druckbereich (3) des Etiketts (1) die klebende Unterseite (2A) des Etiketts (1). Da der RFID-Transponder (6) sandwichartig hinter der transparenten Schicht (2) und der farbigen Hintergrundschicht (5) angeordnet ist, wird dieser durch die zusätzliche Schicht (5) weiter geschützt. Die farbige Hintergrundschicht (5), die durch die transparente Schicht (2) hindurch sichtbar ist, kennzeichnet den Druckbereich (3) auf der Oberseite der transparenten Schicht (2) auf die gedruckt wird.

Die Dicke des Etiketts (1) - ohne Schutzschicht (9) -im Druckbereich beträgt ca. 400$\mu$m - 600pm. Die Dicke des RFID-Transponders beträgt ca. 250$\mu$m - 400pm. Dabei beträgt die Dicke der einseitig klebebeschichteten transparenten Schicht (2) ca. 40mm - 70pm; die Dicke der farbigen Hintergrundschicht ca. 80pm - 110pm und die Dicke der Klebebeschichtung (7) ca. 20pm. Diese Klebebeschichtung (7) ist vorzugsweise auf der Rückseite des RFID-Transponders (6), insbesondere auf der Rückseite der Antennenträgerschicht (6B) angeordnet.

Die Schutzschicht (9) besteht vorzugsweise aus kalandriertem Papier (gut geeignet als Trennpapier), das auf der das Etikett (1) mit der klebenden Unterseite (2B) tragenden Seite in vorteilhafter Weise eine Silikonbeschichtung aufweist, wodurch die rückstandsfreie Ablösung des Etiketts (1) gewährleistet wird. Die Dicke der Schutzschicht (9) beträgt ca. 50pm - 60pm.

Falls der RFID-Transponder (6), der als Komponente im Etikett (1) verbaut wird, eine innere stufenförmige Struktur bestehend aus einer Trägerschicht (6A) mit der RFID-Antennenstruktur und darauf erhaben angeordnetem RFID-IC (6B) aufweist, ist es in vorteilhafter Weise vorgesehen, dass auf der den RFID-IC (6B) aufweisenden Seite der Trägerschicht (6A) eine Zwischen-Klebeschicht (8) angeordnet ist, welche im Bereich des RFID-IC (6B) eine Aussparung aufweist und eine Dicke aufweist, die der Höhe des RFID-IC (6B) entspricht. Die Zwischen-Klebeschicht (8) verbindet den RFID-Transponder (6) mit der farbigen Hintergrundschicht (5). Durch diese so ausgestaltete Zwischen-Klebeschicht (8) wird die Erhabenheit RFID-IC (6B) gegenüber der Antennenträgerschicht (6A) ausgeglichen, so dass der RFID-Transponder (6) insgesamt auf der der Hintergrundschicht (5) zugewandten Seite eine plane Fläche aufweist. Damit wird auf der Hintergrundschicht (5) und im Druckbereich (3) des Etiketts eine lokale Erhebung vermieden, die für die Bedruckung, insbesondere für eine Bedruckung mit einem taktilen Druckverfahren (z.B. Thermotransferdruck) sehr störend ist.

Im Folgenden wird das Etikett unter Bezugnahme auf Abmessungen des Gegenstandes definiert, auf den das Etikett bei der Verwendung durch Umwicklung aufzubringen ist:
Die Länge (L) des Etiketts (1) insgesamt ist größer als der der Umfang (U) des zu etikettierenden Gegenstandes (13), wobei die Länge (LW) der Wickelfahne (4) mindestens so groß ist wie der Umfang (U) des zu etikettierenden Gegenstandes (13). Der Umgang (U) des zu etikettierenden Gegenstandes (13) bezeichnet die Umfangslänge. Bei einem Gegenstand mit einem kreisrunden Umgangsquerschnitt entspricht der Umfang (U) dem Kreisumfang ($2\pi r$). Die Länge (L) des Etiketts (1) sowie die Länge (LW) der Wickelfahne (4) wird in Richtung der Nebeneinanderanordnung von Druckbereich (3) und Wickelfahne (4) gemessen. Die Längenverhältnisse lassen sich wie folgt übersichtlich darstellen:

$$L > U$$

$$LW \geq U$$

$$LW \geq LD$$

Dabei ist die Länge (LS) der einzelnen Schutzschichten (9)größer als die Länge der Etiketten (L): LS > L.

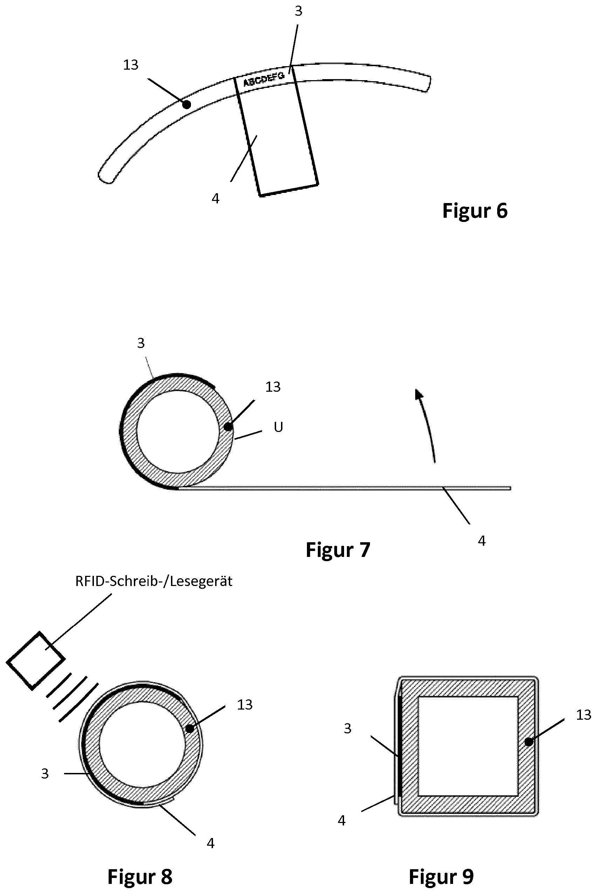

Beim Aufbringen des Etiketts (1) auf den zu etikettierenden Gegenstand wird das Etikett (1) zunächst mit seinem Druckbereich (1) auf den Gegenstand (13) gewickelt (siehe Figur 6 und Figur 7), wobei das Etikett (1) mit der klebenden Unterseite (2B) auf die Oberfläche des Gegenstandes (13) aufgesetzt wird. Anschließend wird die Wickelfahne (4) auf den Gegenstand (13) und über den Druckbereich (3) gewickelt. Dabei haftet das Etikett (1) über die klebende Unterseite (2B) an der Oberfläche des zu etikettierenden Gegenstandes (13), wobei die Wickelfahne (4) ebenfalls über ihre klebende Unterseite (2B) im Druckbereich (3) auf der Oberseite (2B) des Etiketts (1) und ggf. noch auf der Oberfläche des Gegenstandes (13) haftet.

Aufgrund der zuvor definierten Längenverhältnisse wird die Wickelfahne (4) bei auf den Gegenstand (13) aufgebrachtem Etikett (1) auf den Druckbereich (3) gewickelt ist und überdeckt diesen sowie den darunter angeordneten RFID-Transponder (6). Dabei wird der in diesem Bereich unter der Wickelfahne (4) liegende Bedruckung (3A, 3B) vor Verwischen und Verschmutzung geschützt. Da die Wickelfahne (4) transparent ausgebildet ist, ist die darunter liegende Bedruckung (3A, 3B) weiterhin gut lesbar. Darüber hinaus schützt die auf den Druckbereich (3) gewickelte Wickelfahne (4) auch den darunter liegenden RFID-Transponder (6) vor Stoßeinwirkungen und dem Eindringen von Feuchtigkeit.

In der bevorzugten Ausführungsform ist die Länge (LW) der Wickelfahne (4) größer als der Umfang (U) des zu etikettierenden Gegenstandes (13). In dieser Ausführungsform ist die Wickelfahne (4) nicht nur vollständig auf den Druckbereich (3) gewickelt, sondern erstreckt sich in der Umwicklung auch noch über den Druckbereich (3) hinaus (siehe Fig. 8 und 9), wobei der in der Umwicklung über den Druckbereich (3) hinausgehende Abschnitt der Wickelfahne (4) klebend auf einem zuvor aufgebrachten Abschnitt der Wickelfahne (4) befestigt wird. Die Wickelfahne (4) überragt somit das Ende des Druckbereichs (3), wobei die Wickelfahne (4) zusätzlich auf sich selbst nochmals befestigt wird und damit den Druckbereich (3) zusätzlich fixiert. Damit wird ein Ablösen des Etiketts (1) vom Gegenstand (13) im Druckbereich zuverlässig vermieden. Da das Etikett (1) im Druckbereich aufgrund der Hintergrundfolie (5) und aufgrund des dort angeordneten RFID-Transponders (6) (plus ggf. farbige Hintergrundschicht) steifer ist als im Bereich der Wickelfahne (4), neigt das Etikett (1) im Druckbereich (3), wenn es auf einem Gegenstand mit einer gekrümmten Oberfläche befestigt wird, dazu sich abzulösen. Dies wird durch das zuvor beschriebene "Überkleben" mit der Wickelfahne (4) vermieden.

Die zu etikettierenden Gegenstände (13) können einen runden, ovalen oder eckigen Umfangsquerschnitt aufweisen.

Als zu etikettierende Gegenstände (13) kommen beispielsweise elektrische Kabel, Rohrleitungen, welche z. B. in einem industriellen Produktionsumfeld eingesetzt werden, in Betracht. Genauso gut können die erfindungsgemäßen Etiketten (1) jedoch auch für Ampullen, Reagenzgläser oder Probenbehältnisse, die z.B. in einem medizinischen Labor eingesetzt werden, verwendet werden.

Aufgrund der doppelten Kennzeichnungsmöglichkeit, nämlich a)durch Bedruckung und b) durch Einschreiben von Informationen in den integrierten Schaltkreis (RFID-IC) des RFID-Transponders (6), bietet das Etikett einige Vorteile. Die per Bedruckung aufgebrachte Information wird optisch durch manuelles Auslesen oder durch maschinelles Auslesen (bspw. durch einen Barcode-Scanner) ausgelesen. Die Informationen im RFID-Transponder werden drahtlos per Funk eingeschrieben und ausgelesen. Dies geschieht mit sogenannten RFID-Schreib-/Lesegeräten (siehe Fig. 8). Dabei lässt sich der RFID-Transponder (6) auch dann per Funk relativ einfach auslesen, wenn die Bedruckung auf dem Etikett (1) visuell nicht ohne weiteres zugänglich ist.

Der RFID-Transponder und die Bedruckung können dieselbe Information redundant enthalten, so dass die Zuverlässigkeit der Kennzeichnung erhöht wird. Darüber hinaus lässt sich aufgrund des Speichers im RFID-IC im Vergleich zur Bedruckung eine größere Menge an Informationen speichern, so dass die Informationen der Bedruckung durch die Information im RFID-Transponder in einfacher Weise umfangreich ergänzt werden können. Für das erfindungsgemäße Etikett können RFID-Transponder eingesetzt werden, die in unterschiedlichen Frequenzbereichen arbeiten und unterschiedliche Reichweiten aufweisen.

<div align="center">Bezugszeichenliste</div>

| | |
|---|---|
| Etikett | 1 |
| Transparente Schicht | 2 |
| Oberseite | 2A |
| Unterseite | 2B |
| Druckbereich | 3 |

(fortgesetzt)

| | |
|---|---|
| Barcode | 3A |
| Buchstabenfolge | 3B |
| Wickelfahne | 4 |
| Trennlinie zwischen Druckbereich und Wickelfahne | 4A |
| Farbige Hintergrundschicht | 5 |
| RFID-Transponder | 6 |
| Trägerschicht des RFID-Transponders | 6A |
| IC des RFID-Transponders | 6B |
| Klebeschicht | 7 |
| Zwischen-Klebeschicht | 8 |
| Perforationslinie in der Schutzschicht | 10 |
| Lichtdurchlässige Öffnung in der Schutzschicht | 11 |
| Etikettenbogenrolle | 12 |
| Zu etikettierender Gegenstand | 13 |
| Länge des Etiketts | L |
| Länge der Wickelfahne | LW |
| Länge des Druckbereichs | LD |
| Länge der Schutzschicht | LS |

**Patentansprüche**

1. Etikett zum Aufbringen durch Umwicklung auf einen zu kennzeichnenden Gegenstand (13), bestehend aus einer nicht klebenden Oberseite (2A) und einer klebenden Unterseite (2B), mit der das Etikett (1) auf dem Gegenstand (13) befestigt wird, wobei auf der Oberseite (2A) ein Druckbereich (3) zur Aufnahme einer Bedruckung vorhanden ist, wobei das Etikett (1) streifenförmig mit einer Länge (L) ausgebildet ist, die größer ist als der Umfang (U) des zu etikettierenden Gegenstandes (13), wobei

   - neben dem Druckbereich (3) in Längsrichtung des Etiketts (1) eine transparente Wickelfahne (4) angeordnet ist,
   - die Länge (LW) der Wickelfahne (4) mindestens so groß ist wie der Umfang (U) des zu etikettierenden Gegenstandes (13),
   - die Wickelfahne (4) bei auf den Gegenstand (13) aufgebrachtem Etikett (1) auf den Druckbereich (3) gewickelt ist und den Druckbereich (3) überdeckt,

   **dadurch gekennzeichnet, dass**

   - im Druckbereich (3) zwischen der Oberseite (2A) und der Unterseite (2B) ein RFID-Transponder (6) angeordnet ist.

2. Etikett nach Anspruch 1, **dadurch gekennzeichnet, dass** die klebende Unterseite (2B) auf einer Schutzschicht (9) angeordnet ist, wobei die Schutzschicht (9) von der klebenden Unterseite (2B) abziehbar ist.

3. Etikett nach einem der vorhergehenden Ansprüche,
   **dadurch gekennzeichnet, dass**
   dasselbe eine über die gesamte Länge (L) transparente Schicht (2) aufweist, die rückseitig eine transparente Klebebeschichtung aufweist, welche im Bereich der Wickelfahne (4) die Unterseite des Etiketts (1) bildet, und oberseitig über die gesamte Länge (L) des Etiketts (1) die Oberseite (2A) des Etiketts (1) bildet, wobei rückseitig auf der transparenten Schicht (2) im Druckbereich (3) eine farbige Hintergrundschicht (5) angeordnet ist, wobei der RFID-Transponder (6) sandwichartig zwischen der der transparenten Schicht (2) abgewandten Seite der Hintergrundschicht (5) und einer der Hintergrundschicht (5) gegenüberliegenden Klebeschicht (7) angeordnet ist, wobei diese Klebeschicht (7) im Druckbereich (3) des Etiketts (1) die klebende Unterseite (2A) des Etiketts (1) bildet.

4. Etikette nach Anspruch 3, **dadurch gekennzeichnet, dass** der RFID-Transponder (6) eine Trägerschicht (6A) mit der RFID-Antennenstruktur aufweist, wobei der integrierte Schaltkreisbaustein (RFID-IC, 6B) des RFID-Transponders (6) erhaben auf der Trägerschicht (6A) angeordnet ist, wobei auf der den RFID-IC (6B) aufweisenden Seite der Trägerschicht (6A) eine Zwischen-Klebeschicht (8) angeordnet ist, welche im Bereich des RFID-IC (6B) eine Aussparung aufweist und eine Dicke aufweist, die der Höhe des RFID-IC (6B) entspricht.

5. Etikettenband mit einer Vielzahl von jeweils auf einer Schutzschicht (9) angeordneten Etiketten (1) nach einem der Ansprüche 2 bis 4, wobei die Schutzschichten (9) benachbarter Etiketten (1) abtrennbar, insbesondere über einer Perforationslinie (10), miteinander verbunden sind.

6. Etikettenband nach Anspruch 5, **dadurch gekennzeichnet, dass** die Länge (LS) einer jeweiligen Schutzschicht (9) größer ist als die Länge (L) des darauf befindlichen Etiketts (1), wobei an der Trennlinie (4A) zwischen benachbarten Schutzschichten (9) eine lichtdurchlässige Öffnung (11) zur Lichtschrankensteuerung eines Druckers vorhanden ist.

7. Etikettenband nach Anspruch 5 oder 6, **dadurch gekennzeichnet, dass** dies eine Etikettenbandrolle (12)ist.

8. Gegenstand mit einem umwickelten Etikett (1) nach einem der Ansprüche 1, 3 oder 4.

## Claims

1. Label for application by surround winding to an article (13) to be identified, consisting of a non-adhesive top side (2A) and an adhesive bottom side (2B) by which the label (1) is secured on the article (13), the top side (2A) having a print region (3) for accommodating printing, the label (1) taking the form of a strip with a length (L) which is greater than the periphery (U) of the article (13) to be labelled, where

   - adjacent to the print region (3) in the lengthwise direction of the label (1) there is a transparent winding tab (4),
   - the length (LW) of the winding tab (4) is at least equal to the periphery (U) of the article (13) to be labelled,
   - the winding tab (4), with the label (1) applied on the article (13), is wound on the print region (3) and covers the print region (3),

   **characterized in that**

   - in the print region (3) between the top side (2A) and the bottom side (2B) there is an RFID transponder (6) .

2. Label according to Claim 1, **characterized in that** the adhesive bottom side (2B) is disposed on a protective layer (9), the protective layer (9) being removable from the adhesive bottom side (2B).

3. Label according to either of the preceding claims,
   **characterized in that**
   the label has a layer (2) which is transparent over the entire length (L) and which on the reverse has a transparent adhesive coating, which forms the bottom side of the label (1) in the region of the winding tab (4), and on the top side, over the entire length (L) of the label (1), forms the top side (2A) of the label (1), the reverse bearing a coloured background layer (5) on the transparent layer (2) in the print region (3), where the RFID transponder (6) is disposed sandwichwise between that side of the background layer (5) that faces away from the transparent layer (2), and an adhesive layer (7) opposite the background layer (5), where this adhesive layer (7) forms the adhesive bottom side (2A) of the label (1) in the print region (3) of the label (1).

4. Label according to Claim 3, **characterized in that** the RFID transponder (6) has a carrier layer (6A) with the RFID antenna structure, where the integrated circuit module (RFID-IC, 6B) of the RFID transponder (6) is disposed in raised fashion on the carrier layer (6A), where an intermediate adhesive layer (8) is disposed on that side of the carrier layer (6A) that bears the RFID-IC (6B), said layer, in the region of the RFID-IC (6B), having a cutout and having a thickness corresponding to the height of the RFID-IC (6B).

5. Label strip having a multiplicity of labels (1) according to any of Claims 2 to 4, each disposed on a protective layer (9), where the protective layers (9) of adjacent labels (1) are connected to one another such that they can be separated off, in particular by way of a perforation line (10).

6. Label strip according to Claim 5, **characterized in that** the length (LS) of a respective protective layer (9) is greater than the length (L) of the label (1) located thereon, there being a light-transmissive opening (11) at the parting line (4A) between adjacent protective layers (9) for the purpose of the light barrier control of a printer.

7. Label strip according to Claim 5 or 6, **characterized in that** it is a label strip roll (12).

8. Article having a surround-wound label (1) according to any of Claims 1, 3 and 4.

**Revendications**

1. Étiquette destinée à être appliquée par enroulement sur un objet (13) à caractériser, ladite étiquette comprenant une face supérieure non adhésive (2A) et une face inférieure adhésive (2B) avec laquelle l'étiquette (1) est fixée sur l'objet (13), une zone d'impression (3) destinée à être imprimée étant prévue sur la face supérieure (2A), l'étiquette (1) étant conçue sous forme de bande dont la longueur (L) est supérieure à la circonférence (U) de l'objet (13) à étiqueter,

- une languette d'enroulement transparente (4) étant disposée à côté de la zone d'impression (3) dans la direction longitudinale de l'étiquette (1),
- la longueur (LW) de la languette d'enroulement (4) étant au moins égale à la circonférence (U) de l'objet (13) à étiqueter,
- lorsque l'étiquette (1) est appliquée sur l'objet (13), la languette d'enroulement (4) étant enroulée sur la zone d'impression (3) et recouvrant la zone d'impression (3),

**caractérisée en ce que**

- un transpondeur RFID (6) est disposé dans la zone d'impression (3) entre la face supérieure (2A) et la face inférieure (2B).

2. Étiquette selon la revendication 1, **caractérisée en ce que** la face inférieure adhésive (2B) est disposée sur une couche de protection (9), la couche de protection (9) pouvant être décollée de la face inférieure adhésive (2B).

3. Étiquette selon l'une des revendications précédentes,
**caractérisée en ce que**
celle-ci comporte sur toute la longueur (L) une couche transparente (2) qui comporte au verso un revêtement adhésif transparent qui forme la face inférieure de l'étiquette (1) au niveau de la languette d'enroulement (4) et qui forme au recto sur toute la longueur (L) de l'étiquette (1) la face supérieure (2A) de l'étiquette (1), une couche de fond colorée (5) étant disposée au verso sur la couche transparente (2) dans la zone d'impression (3), le transpondeur RFID (6) étant pris en sandwich entre le côté de la couche de fond (5) qui est à l'opposé de la couche transparente (2} et une couche adhésive (7) qui est en regard de la couche de fond (5), cette couche adhésive (7) formant la face inférieure adhésive (2A) de l'étiquette (1) dans la zone d'impression (3) de l'étiquette (1).

4. Étiquette selon la revendication 3, **caractérisée en ce que** le transpondeur RFID (6) comporte une couche de support (6A) pourvue de la structure d'antenne RFID, le module de circuit intégré (RFID-IC, 6B) du transpondeur RFID (6) étant disposé en relief sur la couche de support (6A), une couche adhésive intermédiaire (8), qui comporte un évidement dans la zone du RFID-IC (6B) et qui a une épaisseur qui correspond à la hauteur du RFID-IC (6B), étant disposée sur le côté de la couche de support (6A) qui comporte le RFID-IC (6B).

5. Bande d'étiquettes comprenant un grand nombre d'étiquettes (1), disposées chacune sur une couche de protection (9), selon l'une des revendications 2 à 4, les couches de protection (9) d'étiquettes adjacentes (1) étant séparables, en particulier étant reliées entre elles par une ligne de perforations (10).

6. Bande d'étiquettes selon la revendication 5, **caractérisée en ce que** la longueur (LS) d'une couche de protection respective (9) est supérieure à la longueur (L) de l'étiquette sus-jacente (1), une ouverture transparente (11) destinée à la commande de barrière lumineuse d'une imprimante étant ménagée au niveau de la ligne de séparation (4A) entre des couches de protection adjacentes (9).

7. Bande d'étiquettes selon la revendication 5 ou 6, **caractérisée en ce que** ladite bande est un rouleau de bande d'étiquettes (12).

**8.** Objet sur lequel est enroulée une étiquette (1) selon l'une des revendications 1, 3 et 4.

**Figur 1**

**Figur 2**

Druckbereich, 3

Wickelfahne, 4

**Figur 3**

**Figur 4**

12

**Figur 5**

3

13

ABCDEFG

4

**Figur 6**

3

13

U

4

**Figur 7**

RFID-Schreib-/Lesegerät

13

3

4

**Figur 8**

3

13

4

**Figur 9**

**IN DER BESCHREIBUNG AUFGEFÜHRTE DOKUMENTE**

**In der Beschreibung aufgeführte Patentdokumente**

- DE 102004043301 B4
- EP 0186112 A2
- DE 112004001845 T5
- DE 102008058765 A1
- EP 105870 A1
- US 07145150 A1
- GB 2309955 A
- EP 2581897 A1
- US 2007279233 A1